# EUROPÄISCHE PATENTANMELDUNG

(11) **EP 4 840 375 A2**
(43) Veröffentlichungstag der Anmeldung: **18.11.2026**
(21) Anmeldenummer: 26178191.8
(22) Anmeldetag: 12.05.2026
(51) Int. Cl.: A47J 37/07

(54) **GASGRILL**

(30) Priorität: 16.05.2025 DE 202025102731 U
(71) Anmelder: Ovibell GmbH & Co. KG, 45479 Mülheim an der Ruhr (DE)
(72) Erfinder: DILLEN, Volker, 45470 Mülheim an der Ruhr (DE)
(74) Vertreter: Gottschald Patentanwälte Partnerschaft mbB

(57) **Zusammenfassung**

Die Erfindung betrifft einen Gasgrill, mit einer Rahmenanordnung aufweisend ein vorderes Rahmenteil (2) und ein hinteres Rahmenteil (3), welche einen Brennraum (4) ausbildet, mit einem über die Rahmenanordnung am Brennraum (4) gelagerten Grillrost (5), sowie mit einem Brennrohr (6), welches ein Gaszufuhrelement (7) und mindestens eine Brennöffnung (8) in einem Rohrgrundkörper (9) aufweist, wobei das Brennrohr (6) durch das vordere Rahmenteil (2) entlang einer Einschubrichtung axial zu einer Längsachse (10) des Brennrohrs (6) in den Brennraum (4) einschiebbar und in Auflage zum hinteren Rahmenteil (3) bringbar ist. Es wird vorgeschlagen, dass das Brennrohr (6) ein Sicherungselement (11) aufweist, welches mit dem Einschieben des Brennrohrs (6) derart in Eingriff zu dem vorderen Rahmenteil (2) bringbar ist, dass das Brennrohr (6) mittels des Eingriffs zum vorderen Rahmenteil (2) in einer definierten Drehstellung um die Längsachse (10) gesichert ist.

## Beschreibung

Die vorliegende Erfindung betrifft einen Gasgrill gemäß dem Oberbegriff von Anspruch 1.

Der gattungsgemäße Gasgrill ist dazu bestimmt, durch Verbrennung eines Brenngases Grillgut zuzubereiten. Im Vordergrund steht bei dem in Rede stehenden Gasgrill eine kompakte Bauweise, um den Transport des Gasgrills zu vereinfachen. Hierfür kann der Gasgrill auf einer Rahmenanordnung basieren, welche über steckbare Rahmenteile zusammensetzbar ist, sodass der Gasgrill auf einfache Weise zusammengebaut und demontiert werden kann. Die Rahmenteile können für den Transport platzsparend verstaut werden.

Eine Herausforderung bei einer kompakten Bauweise des Gasgrills besteht darin, eine ausreichende Stabilität des Gasgrills und eine sichere Anordnung der Komponenten zu garantieren. Ein entscheidender Aspekt für die optimale Grillfunktion ist die Positionierung eines Brennrohrs im Brennraum der Rahmenanordnung. Das Brennrohr ist für die Gaszufuhr und Gasverbrennung zuständig und weist insofern mindestens eine Brennöffnung auf, welche in eine definierte Lage im Brennraum und relativ zu einem Grillrost zu bringen ist.

Der Erfindung liegt das Problem zugrunde, einen gattungsgemäßen Gasgrill derart auszugestalten und weiterzubilden, dass hinsichtlich der genannten Herausforderung eine weitere Optimierung erreicht wird.

Das obige Problem wird durch die Merkmale von Anspruch 1 gelöst.

Wesentlich ist die grundsätzliche Überlegung, dass das Brennrohr für eine einfache Montierbarkeit und zur Steigerung der Kompaktheit durch ein vorderes Rahmenteil einschiebbar und in Auflage zu einem hinteren Rahmenteil bringbar ist. Entsprechend kann zunächst die Rahmenanordnung zusammengesetzt und anschließend das Brennrohr platziert werden. Die für das Einschieben des Brennrohrs vorgesehenen geometrischen Freiheitsgrade können dann über die Wechselwirkung zwischen dem Brennrohr und den Rahmenteilen beschränkt werden, um die korrekte Positionierung des Brennrohrs zu sichern.

Im Einzelnen wird vorgeschlagen, dass das Brennrohr ein Sicherungselement aufweist, welches mit dem Einschieben des Brennrohrs derart in Eingriff zu dem vorderen Rahmenteil bringbar ist, dass das Brennrohr mittels des Eingriffs zum vorderen Rahmenteil in einer definierten Drehstellung um die Längsachse gesichert ist. Mit der Sicherung der definierten Drehstellung wird insbesondere die korrekte Ausrichtung der mindestens einen Brennöffnung garantiert.

Über den Eingriff zwischen einer Sicherungsausnehmung und eines Sicherungsvorsprungs gemäß Anspruch 2 kann die Sicherung der Drehstellung auf einfache Weise umgesetzt werden.

Besonders bevorzugt wird gemäß Anspruch 3 das Brennrohr über das Sicherungselement zusätzlich in einer definierten Längsstellung in Einschubrichtung gesichert, womit dem Sicherungselement eine Mehrfachfunktion zukommt. Eine besonders einfache Umsetzung dieser Maßnahme ist über ein über die Kontur einer Einschuböffnung hervorstehendes Sicherungselement gemäß Anspruch 4 gegeben.

Ein drehbares Verriegelungselement am Brennrohr ist in den vorteilhaften Ausgestaltungen gemäß den Ansprüchen 5 bis 7 für eine weitere Sicherung der definierten Längsstellung vorgesehen.

Die bevorzugte Ausgestaltung gemäß Anspruch 8 betrifft einen Flammschutz, welcher mit Haltevorsprüngen an der Rahmenanordnung gelagert sein kann.

Die steckbare und insbesondere plattenförmige Ausgestaltung der Teile der Rahmenanordnung gemäß Anspruch 9 trägt zur bereits angesprochenen, kompakten und leicht zu transportierenden Ausführung des Gasgrills bei.

Besonders bevorzugt ist zudem eine schwenkbare und herausnehmbare Weiterbildung des Grillrosts gemäß den Ansprüchen 11 und 12, womit ein erleichterter Zugriff auf den Brennraum ermöglicht wird. Dabei kann insbesondere die Rahmenanordnung wiederum unabhängig vom Grillrost zusammengebaut und demontiert werden.

Im Folgenden wird die Erfindung anhand einer lediglich Ausführungsbeispiele darstellenden Zeichnung näher erläutert. In der Zeichnung zeigt
- Fig. 1: einen vorschlagsgemäßen Gasgrill in einer Explosionsdarstellung,
- Fig. 2: den Gasgrill in einer perspektivischen Ansicht,
- Fig. 3: den Gasgrill in perspektivischen Ansichten mit a) dem Grillrost in der Grillstellung, b) dem Grillrost in der Offenstellung und
- Fig. 4: a) den Gasgrill in einer Draufsicht, b) eine Detailansicht des Sicherungselements.

Das in den Figuren dargestellte und insoweit bevorzugte Ausführungsbeispiel betrifft einen Gasgrill 1 zur Zubereitung von Grillgut über das Verbrennen eines Brenngases.

Der Gasgrill 1 ist mit einer Rahmenanordnung aufweisend ein vorderes Rahmenteil 2 und ein hinteres Rahmenteil 3 ausgestattet. Die Bezeichnung als "vorderes" bzw. "hinteres" Rahmenteil ist hierbei weit zu verstehen und ist hier in Bezug auf eine untenstehend erläuterte Einschubbewegung gewählt. Insbesondere bezieht sich die Bezeichnung als "vorderes" bzw. "hinteres" Rahmenteil damit nicht auf eine bestimmte Ausrichtung des jeweiligen Rahmenteils 2, 3 beim Betrieb des Gasgrills 1 relativ zu einem Benutzer. Die Rahmenanordnung bildet einen Brennraum 4 aus. Der Brennraum 4 ist zum Verbrennen des Brenngases vorgesehen und ist hier und vorzugsweise durch einen Raumabschnitt zwischen dem vorderen Rahmenteil 2 und dem hinteren Rahmenteil 3 gebildet, wobei die Rahmenteile 2, 3 den Brennraum 4 begrenzen.

Der Gasgrill 1 ist mit einem über die Rahmenanordnung am Brennraum 4 gelagerten Grillrost 5 ausgestattet. Der Grillrost 5 dient als Auflage für das zuzubereitende Grillgut beim Betrieb des Gasgrills 1. Der Grillrost 5 ist hier und vorzugsweise an einem beim Betrieb des Grillguts oben vorgesehenen Abschnitt des Brennraums 4 gelagert.

Der Gasgrill 1 ist ferner mit einem Brennrohr 6 ausgestattet, welches ein Gaszufuhrelement 7 und mindestens eine Brennöffnung 8 in einem Rohrgrundkörper 9 aufweist. Das Gaszufuhrelement 7 dient dem Anschluss des Brennrohrs 6 an eine Brenngasquelle und ist in der Zeichnung nicht näher dargestellt. Beispielsweise weist das Gaszufuhrelement 7 einen Anschlussschlauch, ein Ventil, einen Druckminderer, ein Manometer und/oder einen Adapter für eine Gaskartusche oder dergleichen auf. Über das Gaszufuhrelement 7 kann Brenngas in das Innere des Brennrohrs 6 geleitet werden, wobei das Brenngas an der mindestens einen Brennöffnung 8 austreten und dort entzündet werden kann. Besonders bevorzugt sind mehrere Brennöffnungen 8 entlang einer geometrischen Längsachse 10 des Brennrohrs 6 vorgesehen. Der Rohrgrundkörper 9 ist vorzugsweise mit einem runden Querschnitt zur Längsachse 10 ausgeführt. Bei der Längsachse 10 handelt es sich insofern um eine Vorzugsrichtung, insbesondere um eine Symmetrieachse des Rohrgrundkörpers 9.

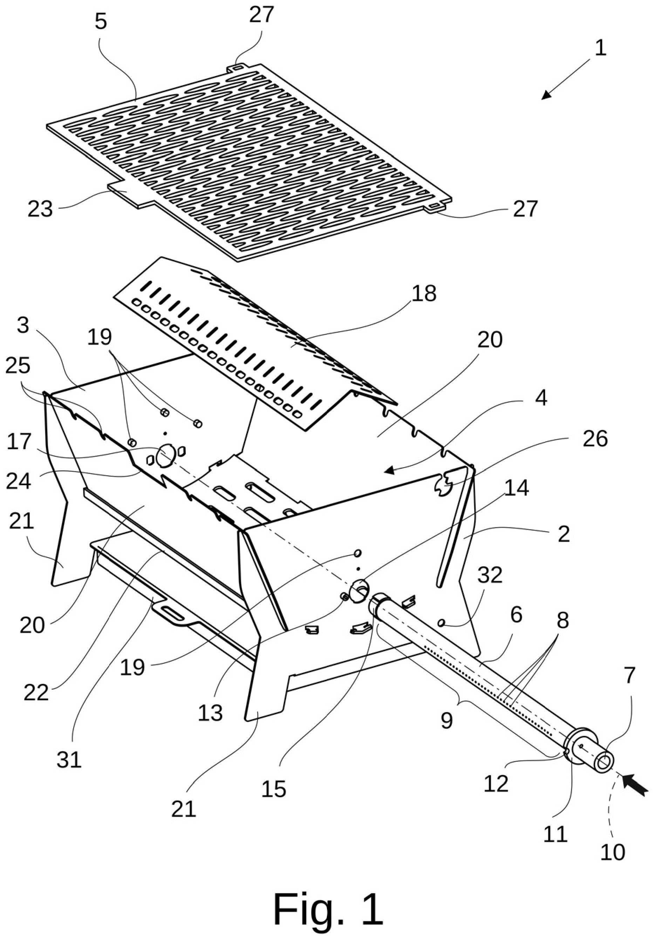

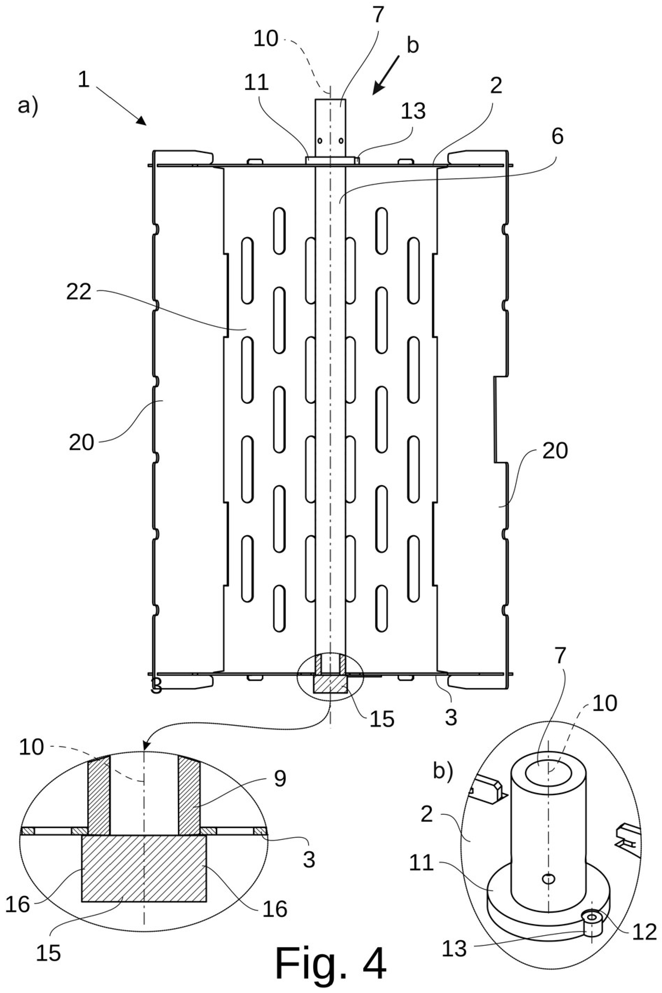

Um eine hohe Kompaktheit des Gasgrills 1 im demontierten Zustand zu erreichen, ist das Brennrohr 6 lösbar zur Rahmenanordnung vorgesehen. Das Brennrohr 6 kann in einer Einschubbewegung in den Brennraum 4 eingebracht sowie in einer Ausziehbewegung aus dem Brennraum 4 entfernt werden. Für die Einschubbewegung ist das Brennrohr 6 durch das vordere Rahmenteil 2 entlang einer Einschubrichtung axial zur Längsachse 10 des Brennrohrs 6 in den Brennraum 4 einschiebbar und in Auflage zum hinteren Rahmenteil 3 bringbar. Der Rohrgrundkörper 9 wird mit der Einschubbewegung zumindest teilweise und vorzugsweise zumindest mit den Brennöffnungen 8 im Brennraum 4 platziert. Die Einschubbewegung ist insbesondere anhand von Fig. 1 dargestellt, wobei die Einschubrichtung durch den Pfeil symbolisiert ist. Die Einschubbewegung erfolgt vorzugsweise überwiegend axial zur Längsachse 10. Das Gaszufuhrelement 7 ist vorzugsweise am Rohrgrundkörper 9 endseitig entgegen der Einschubrichtung angeordnet und befindet sich in der eingeschobenen Stellung außerhalb des Brennraums 4 (Fig. 4a)), sodass es nicht zwingend notwendig ist, das Gaszufuhrelement 7 in der Einschubbewegung durch das vordere Rahmenteil 2 zu führen.

Durch die Auflage zum hinteren Rahmenteil 3 wird das Brennrohr 6 in der eingeschobenen Stellung gehalten. Weiter wird das Brennrohr 6 über eine Wechselwirkung mit dem vorderen Rahmenteil 2 gehalten, hier und vorzugsweise zunächst ebenfalls über eine Auflage zum vorderen Rahmenteil 2. Mit einer Auflage ist hierbei gemeint, dass das Brennrohr 6 zumindest in der Ausrichtung des Gasgrills 1 im Betrieb gewichtsbedingt gehalten ist.

Ferner ist hier vorgesehen, dass das Brennrohr 6 ein Sicherungselement 11 aufweist, welches mit dem Einschieben des Brennrohrs 6 derart in Eingriff zu dem vorderen Rahmenteil 2 bringbar ist, dass das Brennrohr 6 mittels des Eingriffs zum vorderen Rahmenteil 2 in einer definierten Drehstellung um die Längsachse 10 gesichert ist.

Das Sicherungselement 11 ist vorzugsweise an einem endseitigen Abschnitt am Rohrgrundkörper 9 entgegen der Einschubrichtung angeordnet und befindet sich in der eingeschobenen Stellung des Brennrohrs 6 außerhalb des Brennraums 4. Durch die Einstellung der definierten Drehstellung wird die mindestens eine Brennöffnung 8 in eine definierte Ausrichtung im Brennraum 4 gebracht. Beispielsweise ist vorgesehen, dass die Brennöffnungen 8 im Betrieb des Gasgrills 1 seitlich, etwa entlang eines horizontalen Schnitts durch das Brennrohr 6 entlang der Längsachse 10, insbesondere beidseitig, angeordnet sind (Fig. 1).

Insbesondere ist somit in der angesprochenen Ausgestaltung aufweisend einen Rohrgrundkörper 9 mit einem runden Querschnitt eine Verdrehsicherung nicht zwingend über den Rohrgrundkörper 9 umgesetzt, sondern kann über das Sicherungselement 11 bewirkt werden. Entsprechend kann der Rohrgrundkörper 9 besonders einfach und kostengünstig ausgestaltet sein.

Weiter ist hier und vorzugsweise vorgesehen, dass das Sicherungselement 11 eine Sicherungsausnehmung 12 aufweist, und dass der Eingriff mit dem vorderen Rahmenteil 2 in der definierten Drehstellung über ein in die Sicherungsausnehmung 12 greifenden Sicherungsvorsprung 13 des vorderen Rahmenteils 2 bewirkt ist. Wie insbesondere aus Fig. 1 deutlich wird, ist der Sicherungsvorsprung 13 hier und vorzugsweise an einer Außenfläche des vorderen Rahmenteils 2 vorgesehen. Der Sicherungsvorsprung 13 kann beispielsweise als Nietelement, als Durchzug, als Biegung oder dergleichen ausgestaltet sein. Zum Erreichen der eingeschobenen Stellung des Brennrohrs 6 ist das Brennrohr 6 zumindest mit Abschluss der Einschubbewegung in die definierte Drehstellung zu bringen, sodass der Eingriff des Sicherungsvorsprungs 13 in die Sicherungsausnehmung 12 bewirkt ist. Durch das Eingreifen des Sicherungsvorsprungs 13 in die Sicherungsausnehmung 12 wird dann die Sicherung gegen ein Verdrehen des Brennrohrs 6 erreicht.

Vorzugsweise bedingt das Erreichen der Auflage am hinteren Rahmenteil 3, dass der Eingriff mit dem vorderen Rahmenteil 2 bewirkt ist, beispielsweise über eine Abstimmung der Länge des Brennrohrs 6 und des Sicherungselements 11 und Sicherungsvorsprungs 13. Entsprechend kann das Brennrohr 6 für den Benutzer erkennbar erst dann eine hinreichend stabile Stellung einnehmen, wenn auch die Sicherung der Drehstellung bewirkt ist.

Grundsätzlich können auch mehrere Drehstellungen definiert sein, welche mittels des Sicherungselements 11 gesichert werden können. Beispielsweise kann das Sicherungselement 11 mehrere Sicherungsausnehmungen 12 aufweisen, welche jeweils einer Drehstellung mit einem entsprechenden Eingriff zum Sicherungsvorsprung 13 entsprechen.

Weiter ist hier und vorzugsweise vorgesehen, dass das Brennrohr 6 über eine Anlage des Sicherungselements 11 zum vorderen Rahmenteil 2 in einer definierten Längsstellung in Einschubrichtung gesichert ist. Hier und vorzugsweise erfolgt die Sicherung der definierten Längsstellung lediglich in einer Richtung, hier in Einschubrichtung, sodass das Brennrohr 6 nicht weiter eingeschoben werden kann. Für eine "Anlage" ist nicht zwingend ein ständiger mechanischer Kontakt zwischen den Komponenten in der eingeschobenen Stellung notwendig. Vielmehr ist es ausreichend, wenn bei einem Bewegen des Brennrohrs 6 aus der eingeschobenen Stellung ein mechanischer Kontakt erreicht wird.

Hier und vorzugsweise ist vorgesehen, dass das vordere Rahmenteil 2 eine Einschuböffnung 14 für das Brennrohr 6 aufweist, durch welche das Brennrohr 6 in den Brennraum 4 einschiebbar ist. Bei der Kontur der Einschuböffnung 14 handelt es sich bevorzugt um eine geschlossene Kontur.

Weiter vorzugsweise steht das Sicherungselement 11 bei eingeschobenem Brennrohr 6 radial zur Längsachse 10 über die Kontur der Einschuböffnung 14 hervor. Das Sicherungselement 11 weist somit im Querschnitt senkrecht zur Längsachse 10 gegenüber der Einschuböffnung 14 einen Überstand auf, wodurch das Sicherungselement 11 nicht durch die Einschuböffnung 14 gebracht werden kann. Vielmehr gelangt das Sicherungselement 11 mit der Einschubbewegung in Anlage zum vorderen Rahmenteil 2 und sichert die Längsstellung in Einschubrichtung (Fig. 4). Hier und vorzugsweise ist das Sicherungselement 11 im Querschnitt zur Längsachse 10 - abgesehen von der Sicherungsausnehmung 12 - rund, vorzugsweise kreisförmig geformt, wobei das Sicherungselement 11 einen größeren Durchmesser als der Rohrgrundkörper 9 aufweist.

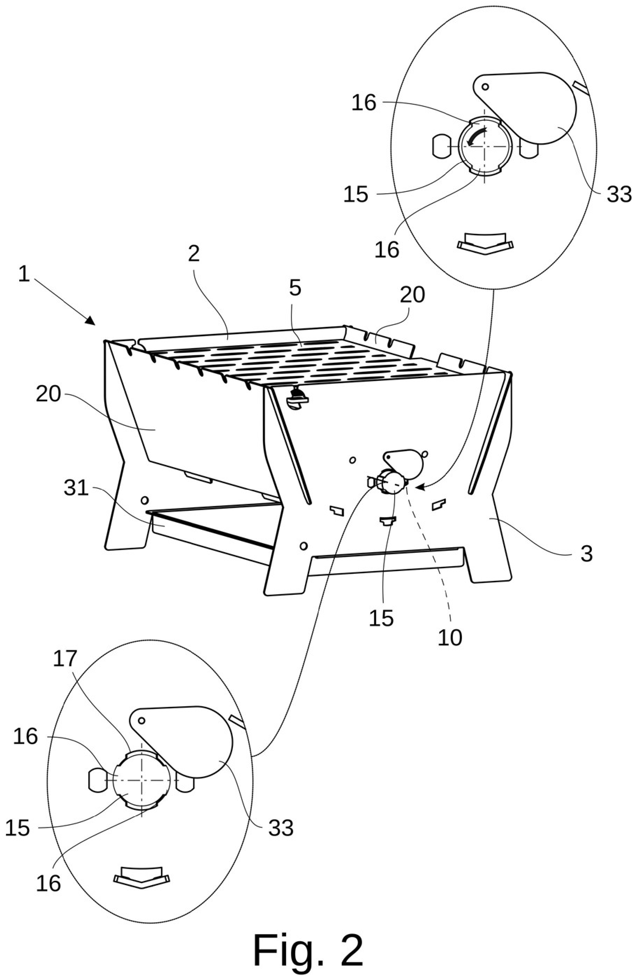

Weiter ist hier und vorzugsweise vorgesehen, dass das Brennrohr 6 ein um die Längsachse 10 drehbares Verriegelungselement 15 aufweist, welches in mindestens einer ersten Drehstellung das Einschieben des Brennrohrs 6 zur Auflage zum hinteren Rahmenteil 3 ermöglicht und welches in mindestens einer zweiten Drehstellung das Brennrohr 6 über eine Anlage zum hinteren Rahmenteil 3 in der definierten Längsstellung entgegen der Einschubrichtung sichert. Entsprechend kann die Einschubbewegung mit dem Verriegelungselement 15 in der ersten Drehstellung vorgenommen und durch ein Überführen des Verriegelungselements 15 in die zweite Drehstellung das Brennrohr 6 gesichert werden, was beispielhaft in Fig. 2 dargestellt ist.

Besonders bevorzugt ist das Brennrohr 6 über das vordere Rahmenteil 2 in einer Richtung axial zur Längsachse 10 und über das hintere Rahmenteil 3 in der weiteren Richtung axial zur Längsachse 10 in der definierten Längsstellung gesichert. Bei dem dargestellten Ausführungsbeispiel wird dies wie bereits beschrieben einerseits über das Sicherungselement 11 und andererseits über das Verriegelungselement 15 erreicht (vgl. Fig. 4).

Bevorzugt ist vorgesehen, dass das Verriegelungselement 15 mindestens ein radial zur Längsachse 10 über den Rohrgrundkörper 9 hervorstehendes Flügelelement 16 aufweist, welches in der zweiten Drehstellung die Anlage zum hinteren Rahmenteil 3 bewirkt, vorzugsweise, dass das hintere Rahmenteil 3 eine Aufnahmeöffnung 17 zum Durchschieben des Verriegelungselements 15 aufweist, deren Form dem Querschnitt des Rohrgrundkörpers 9 senkrecht zur Längsachse 10 und des Verriegelungselements 15 in der ersten Drehstellung entspricht.

Wie der Darstellung aus Fig. 2 zu entnehmen ist, kann das Verriegelungselement 15 in der ersten Drehstellung durch die Aufnahmeöffnung 17 geschoben werden, sodass der Rohrgrundkörper 9 an der Aufnahmeöffnung 17 aufliegt. Die Aufnahmeöffnung 17 weist eine runde, dem Querschnitt des Rohrgrundkörpers 9 entsprechende Grundform auf, wobei zusätzlich zwei Flügelelemente 16 in der ersten Drehstellung entsprechende Ausnehmungen vorgesehen sind (Fig. 2 - obere Detailansicht). Durch ein Verdrehen des Verriegelungselements 15 in die zweite Drehstellung hintergreifen die Flügelelemente 16 dagegen die Aufnahmeöffnung 17 und das hintere Rahmenteil 3 (Fig. 2 - untere Detailansicht und Fig. 4a)).

Weiter ist vorzugsweise vorgesehen, dass die Form der Einschuböffnung 14 dem Querschnitt des Rohrgrundkörpers 9 senkrecht zur Längsachse 10 und des Verriegelungselements 15 in der ersten Drehstellung entspricht. Insbesondere sind die Einschuböffnung 14 und Aufnahmeöffnung 17 identisch ausgestaltet. Damit ist während der Einschubbewegung kein Verdrehen des Verriegelungselements 15 erforderlich.

Weiter ist hier und vorzugsweise vorgesehen, dass zwischen dem Brennrohr 6 und dem Grillrost 5 ein Flammschutz 18 im Brennraum 4 angeordnet ist. Der Flammschutz 18 ist beispielhaft in Fig. 1 dargestellt und kann zur Abdeckung des Brennrohrs 6 vom Grillgut vorgesehen sein, etwa zum indirekten Grillen und/oder zum Schutz des Brennrohrs 6. Besonders bevorzugt ist der Flammschutz 18 auf Haltevorsprüngen 19 der Rahmenanordnung, insbesondere des vorderen Rahmenteils 2 und/oder des hinteren Rahmenteils 3, gelagert. Dabei kann der Flammschutz 18 in einer besonders bevorzugten Ausgestaltung lediglich durch eine gewichtsbedingte Auflage auf den Haltevorsprüngen 19 gehalten sein.

Hier und vorzugsweise verfügt eines der Rahmenteile 2, 3 über drei Haltevorsprünge 19 (in Fig. 1 das hintere Rahmenteil 3) und das weitere Rahmenteil 2, 3 über einen Haltevorsprung 19 (in Fig. 1 das vordere Rahmenteil 2). Der Flammschutz kann auf jeweils einem Haltevorsprung 19 aufliegen. Die zwei zusätzlichen Haltevorsprünge 19 an einem der Rahmenteile 2, 3 können im Betrieb oberhalb des Flammschutzes 18 angeordnet sein und somit den Flammschutz 18 auf einfache Weise gegen ein Verkippen sichern. Die Haltevorsprünge 19 können als Nietelemente, als Durchzüge, als Biegungen oder dergleichen ausgestaltet sein.

Weiter ist hier und vorzugsweise vorgesehen, dass die Rahmenanordnung Seitenteile 20 aufweist, über welche das vordere Rahmenteil 2 und das hintere Rahmenteil 3, insbesondere steckbar, miteinander verbunden sind, vorzugsweise, dass die Seitenteile 20, das vordere Rahmenteil 2 und/oder das hintere Rahmenteil 3 plattenförmig ausgebildet ist bzw. sind.

Über die plattenförmige Ausgestaltung können die Teile der Rahmenanordnung zum erleichterten Transport aufeinandergelegt werden. Mit der steckbaren Verbindung der Teile kann der Zusammenbau und die Demontage des Gasgrills 1 vorzugsweise werkzeugfrei erfolgen. In der dargestellten und insofern bevorzugten Ausgestaltung weisen das vordere Rahmenteil 2, das hintere Rahmenteil 3 und die Seitenteile 20 an den Seitenbereichen jeweilige Schlitze auf, welche zur Herstellung der Verbindung zwischen den Teilen ineinander gesteckt werden.

Die Seitenteile 20 können im Betriebszustand des Gasgrills 1 winklig zueinander angeordnet sein und vorzugsweise mit ansteigendem Abstand vom Grillrost 5 aufeinander zulaufen. Das vordere Rahmenteil 2 und das hintere Rahmenteil 3 verfügen hier und vorzugsweise über jeweilige Standfüße 21 zur Anordnung des Gasgrills 1 auf einer Abstellfläche, wobei die Seitenteile 20 vorzugsweise nicht im Kontakt zur Abstellfläche stehen.

Weiter ist hier und vorzugsweise vorgesehen, dass die Rahmenanordnung ein Bodenteil 22 aufweist, welches zwischen vorderem Rahmenteil 2 und hinterem Rahmenteil 3 am Brennraums 4 angeordnet ist, vorzugsweise, dass das Bodenteil 22 eine gewölbte Form oder ebene Form aufweist.

Im Betriebszustand des Gasgrills 1 kann das Bodenteil 22 die untere Begrenzung des Brennraums 4 bilden. Ferner kann das Bodenteil 22 die alternative Nutzung des Gasgrills 1 mit Holzkohle ermöglichen, etwa bei herausgezogenem Brennrohr 6, wofür insbesondere die gewölbte Form vorteilhaft ist. Das Bodenteil 22 ist hier und vorzugsweise über Steckverbindungen mit dem vorderen Rahmenteil 2 und dem hinteren Rahmenteil 3 verbunden, sodass die Rahmenanordnung mittels des Bodenteils 22 weiter stabilisiert wird.

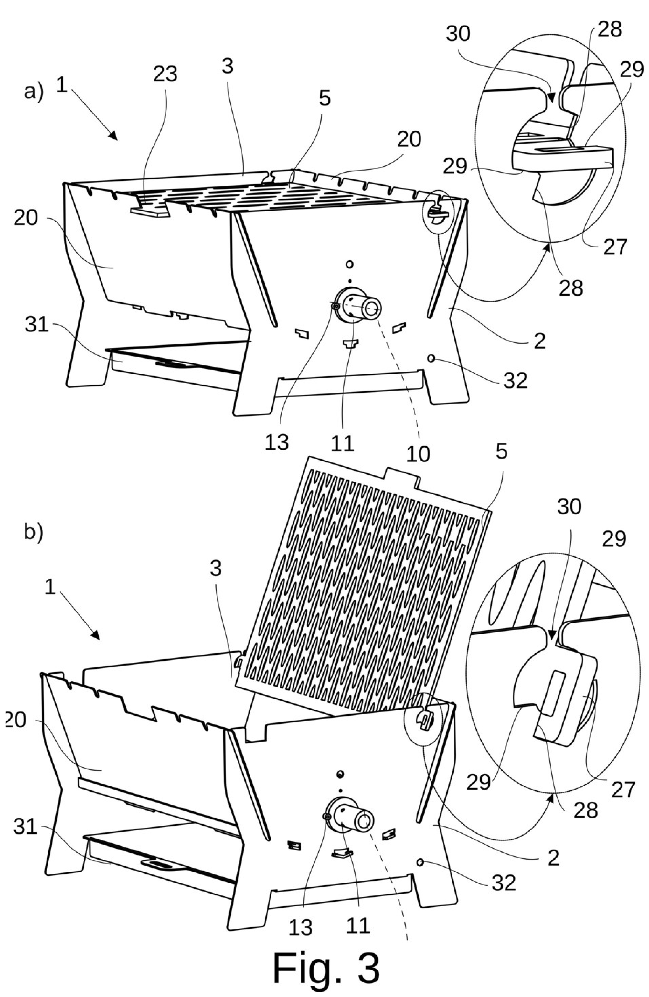

Weiter ist hier und vorzugsweise vorgesehen, dass der Grillrost 5 an einem Seitenbereich zwischen einer Grillstellung und einer Offenstellung über eine Schwenklagerung an der Rahmenanordnung, insbesondere an dem vorderen Rahmenteil 2 und dem hinteren Rahmenteil 3, schwenkbar gelagert ist. Die Grillstellung (Fig. 3a)) ist für den Betrieb des Gasgrills 1 vorgesehen und erlaubt das Auflegen von Grillgut auf den Grillrost 5. Die Offenstellung (Fig. 3b)) ermöglicht einen Zugriff auf den Brennraum 4, insbesondere zur Unterstützung der Einschubbewegung, zum Einbringen des Flammschutzes 18 oder für die alternative Nutzung mit Holzkohle.

Vorzugsweise weist der Grillrost 5, weiter vorzugsweise an einer dem Seitenbereich gegenüberliegenden Seite, ein Griffelement 23 zum Verschwenken des Grillrosts 5 auf. Das Griffelement 23 kann hierbei vorzugsweise zentral an der dem Seitenbereich gegenüberliegenden Seite vorgesehen sein, sodass der Grillrost 5, etwa im Betrieb des Gasgrills 1 mit einer Zange oder dergleichen, auf einfache Weise angehoben und zwischen Grillstellung und Offenstellung verstellt werden kann.

Besonders bevorzugt ist der Grillrost 5 zwischen den Seitenteilen 20, und insbesondere zwischen dem vorderen Rahmenteil 2 und hinteren Rahmenteil 3 angeordnet, sodass ein Überstand der Rahmenanordnung über den Grillrost 5 besteht, der als Begrenzung der Grillfläche dient. Das Griffelement 23 liegt hier in einer Griffelementausnehmung 24 eines der Seitenteile 20 auf.

Die Seitenteile 20 sind vorzugsweise mit Auflageausnehmungen 25 versehen, welche insbesondere der Auflage von Spießen oder dergleichen dienen.

Weiter ist hier und vorzugsweise vorgesehen, dass die Schwenklagerung derart ausgestaltet ist, dass der Grillrost 5 in einer, insbesondere zwischen Grillstellung und Offenstellung vorgesehenen, Freigabestellung aus der Rahmenanordnung herausnehmbar und außerhalb der Freigabestellung gegen ein Herausnehmen gesichert ist. Die Freigabestellung entspricht hier einer lotrechten Ausrichtung des Grillrosts 5 im Betrieb des Gasgrills 1.

Vorzugsweise ist vorgesehen, dass die Schwenklagerung über in Lagerungsöffnungen 26 der Rahmenanordnung greifende Lagerungsvorsprünge 27 gebildet ist, weiter vorzugsweise, dass die Lagerungsöffnungen 26 jeweilige Anschlagsflächen 28 für die Offenstellung, Halteflächen 29 für die Grillstellung zum Kontakt mit den Lagerungsvorsprüngen 27 sowie eine Freigabedurchführung 30 zum Herausnehmen des Grillrosts 5 aufweisen. Die Form der Lagerungsöffnungen 26 geht beispielhaft aus der Fig. 3 hervor.

Weiter ist hier und vorzugsweise vorgesehen, dass eine zwischen dem vorderen Rahmenteil 2 und dem hinteren Rahmenteil 3 , hier im Betrieb unterhalb des Brennraums 4 , einschiebbare Abtropfschale 31 vorgesehen ist, vorzugsweise, dass die Abtropfschale 31 an jeweiligen Abkröpfungen von vorderem Rahmenteil 2 und hinterem Rahmenteil 3 verschiebbar gelagert ist, weiter vorzugsweise, dass mindestens ein Anschlagselement 32 am vorderen Rahmenteil 2 und/oder hinteren Rahmenteil 3 zur Sicherung der Abtropfschale 31 vorgesehen ist. Die Sicherung der Abtropfschale 31 dient als Begrenzung für das Einschieben der Abtropfschale 31.

Weiter ist hier und vorzugsweise vorgesehen, dass das vordere Rahmenteil 2 ein verstellbares Abdeckelement 33 für die Einschuböffnung 14 und/oder das hintere Rahmenteil 3 ein verstellbares Abdeckelement 33 für die Aufnahmeöffnung 17 aufweist bzw. aufweisen, was insbesondere in Fig. 2 zu erkennen ist. Das Abdeckelement 33 ist hier und vorzugsweise drehbar an dem jeweiligen Rahmenteil 2, 3 gelagert, etwa über ein Nietelement oder dergleichen. Über das Abdeckelement 33 kann der Brennraum 4 insbesondere für den Transport oder für den Betrieb mit Kohle weiter geschlossen werden.

## Patentansprüche

1. Gasgrill, mit einer Rahmenanordnung aufweisend ein vorderes Rahmenteil (2) und ein hinteres Rahmenteil (3), welche einen Brennraum (4) ausbildet, mit einem über die Rahmenanordnung am Brennraum (4) gelagerten Grillrost (5), sowie mit einem Brennrohr (6), welches ein Gaszufuhrelement (7) und mindestens eine Brennöffnung (8) in einem Rohrgrundkörper (9) aufweist, wobei das Brennrohr (6) durch das vordere Rahmenteil (2) entlang einer Einschubrichtung axial zu einer Längsachse (10) des Brennrohrs (6) in den Brennraum (4) einschiebbar und in Auflage zum hinteren Rahmenteil (3) bringbar ist,
**dadurch gekennzeichnet,**
**dass** das Brennrohr (6) ein Sicherungselement (11) aufweist, welches mit dem Einschieben des Brennrohrs (6) derart in Eingriff zu dem vorderen Rahmenteil (2) bringbar ist, dass das Brennrohr (6) mittels des Eingriffs zum vorderen Rahmenteil (2) in einer definierten Drehstellung um die Längsachse (10) gesichert ist.

2. Gasgrill nach Anspruch 1, **dadurch gekennzeichnet, dass** das Sicherungselement (11) eine Sicherungsausnehmung (12) aufweist, und dass der Eingriff mit dem vorderen Rahmenteil (2) in der definierten Drehstellung über ein in die Sicherungsausnehmung (12) greifenden Sicherungsvorsprung (13) des vorderen Rahmenteils (2) bewirkt ist.

3. Gasgrill nach Anspruch 1 oder 2, **dadurch gekennzeichnet, dass** das Brennrohr (6) über eine Anlage des Sicherungselements (11) zum vorderen Rahmenteil (2) in einer definierten Längsstellung in Einschubrichtung gesichert ist.

4. Gasgrill nach einem der vorhergehenden Ansprüche, **dadurch gekennzeichnet, dass** das vordere Rahmenteil (2) eine Einschuböffnung (14) für das Brennrohr (6) aufweist, durch welche das Brennrohr (6) in den Brennraum (4) einschiebbar ist, vorzugsweise, dass das Sicherungselement (11) bei eingeschobenen Brennrohr (6) radial zur Längsachse (10) über die Kontur der Einschuböffnung (14) hervorsteht.

5. Gasgrill nach einem der vorhergehenden Ansprüche, **dadurch gekennzeichnet, dass** das Brennrohr (6) ein um die Längsachse (10) drehbares Verriegelungselement (15) aufweist, welches in mindestens einer ersten Drehstellung das Einschieben des Brennrohrs (6) zur Auflage zum hinteren Rahmenteil (3) ermöglicht und welches in mindestens einer zweiten Drehstellung das Brennrohr (6) über eine Anlage zum hinteren Rahmenteil (3) in der definierten Längsstellung entgegen der Einschubrichtung sichert.

6. Gasgrill nach Anspruch 5, **dadurch gekennzeichnet, dass** das Verriegelungselement (15) mindestens ein radial zur Längsachse (10) über den Rohrgrundkörper (9) hervorstehendes Flügelelement (16) aufweist, welches in der zweiten Drehstellung die Anlage zum hinteren Rahmenteil (3) bewirkt, vorzugsweise, dass das hintere Rahmenteil (3) eine Aufnahmeöffnung (17) zum Durchschieben des Verriegelungselements (15) aufweist, deren Form dem Querschnitt des Rohrgrundkörpers (9) senkrecht zur Längsachse (10) und des Verriegelungselements (15) in der ersten Drehstellung entspricht.

7. Gasgrill nach den Ansprüchen 4 bis 6, **dadurch gekennzeichnet, dass** die Form der Einschuböffnung (14) dem Querschnitt des Rohrgrundkörpers (9) senkrecht zur Längsachse (10) und des Verriegelungselements (15) in der ersten Drehstellung entspricht.

8. Gasgrill nach einem der vorhergehenden Ansprüche, **dadurch gekennzeichnet, dass** zwischen dem Brennrohr (6) und dem Grillrost (5) ein Flammschutz (18) im Brennraum (4) angeordnet ist, vorzugsweise, dass der Flammschutz (18) auf Haltevorsprüngen (19) der Rahmenanordnung, insbesondere des vorderen Rahmenteils (2) und/oder des hinteren Rahmenteils (3), gelagert ist, weiter vorzugsweise, dass eines der Rahmenteile über drei Haltevorsprünge (19) und das weitere Rahmenteil über einen Haltevorsprung (19) verfügt.

9. Gasgrill nach einem der vorhergehenden Ansprüche, **dadurch gekennzeichnet, dass** die Rahmenanordnung Seitenteile (20) aufweist, über welche das vordere Rahmenteil (2) und das hintere Rahmenteil (3), insbesondere steckbar, miteinander verbunden sind, vorzugsweise, dass die Seitenteile (20), das vordere Rahmenteil (2) und/oder das hintere Rahmenteil (3) plattenförmig ausgebildet ist bzw. sind.

10. Gasgrill nach einem der vorhergehenden Ansprüche, **dadurch gekennzeichnet, dass** die Rahmenanordnung ein Bodenteil (22) aufweist, welches zwischen vorderem Rahmenteil (2) und hinterem Rahmenteil (3) an einem unteren Abschnitt des Brennraums (4) angeordnet ist, vorzugsweise, dass das Bodenteil (22) eine gewölbte Form oder ebene Form aufweist.

11. Gasgrill nach einem der vorhergehenden Ansprüche, **dadurch gekennzeichnet, dass** der Grillrost (5) an einem Seitenbereich zwischen einer Grillstellung und einer Offenstellung über eine Schwenklagerung an der Rahmenanordnung, insbesondere an dem vorderen Rahmenteil (2) und dem hinteren Rahmenteil (3), schwenkbar gelagert ist, vorzugsweise, dass der Grillrost (5), weiter vorzugsweise an einer dem Seitenbereich gegenüberliegenden Seite, ein Griffelement (23) zum Verschwenken des Grillrosts (5) aufweist.

12. Gasgrill nach Anspruch 11, **dadurch gekennzeichnet, dass** die Schwenklagerung derart ausgestaltet ist, dass der Grillrost (5) in einer, insbesondere zwischen Grillstellung und Offenstellung vorgesehenen, Freigabestellung aus der Rahmenanordnung herausnehmbar und außerhalb der Freigabestellung gegen ein Herausnehmen gesichert ist, vorzugsweise, dass die Schwenklagerung über in Lagerungsöffnungen (26) der Rahmenanordnung greifende Lagerungsvorsprünge (27) gebildet ist, weiter vorzugsweise, dass die Lagerungsöffnungen (26) jeweilige Anschlagsflächen (28) für die Offenstellung, Halteflächen (29) für die Grillstellung zum Kontakt mit den Lagerungsvorsprüngen (27) sowie Freigabedurchführungen (30) zum Herausnehmen des Grillrosts (5) aufweisen.

13. Gasgrill nach einem der vorhergehenden Ansprüche, **dadurch gekennzeichnet, dass** eine zwischen dem vorderen Rahmenteil (2) und dem hinteren Rahmenteil (3) einschiebbare Abtropfschale (31) vorgesehen ist, vorzugsweise, dass die Abtropfschale (31) an jeweiligen Abkröpfungen von vorderem Rahmenteil (2) und hinterem Rahmenteil (3) verschiebbar gelagert ist, weiter vorzugsweise, dass mindestens ein Anschlagselement (32) am vorderen Rahmenteil (2) und/oder hinteren Rahmenteil (3) zur Sicherung der Abtropfschale (31) vorgesehen ist.

14. Gasgrill nach einem der vorhergehenden Ansprüche, **dadurch gekennzeichnet, dass** das vordere Rahmenteil (2) ein verstellbares Abdeckelement (33) für die Einschuböffnung (14) und/oder das hintere Rahmenteil (3) ein verstellbares Abdeckelement (33) für die Aufnahmeöffnung (17) aufweist bzw. aufweisen.
